# FASCICULE DE BREVET EUROPEEN

(11) **EP 0 500 662 B1**
(45) Date de publication et mention de la délivrance du brevet: **21.09.1994**
(21) Numéro de dépôt: 90916755.3
(22) Date de dépôt: 08.11.1990
(51) Int. Cl.: A01G 9/14, E04C 3/40

(54) **SUPPORT MULTIFONCTIONS POUR CHARPENTE DE SERRE**
MULTIFUNKTIONELLE STÜTZE FÜR GEWÄCHSHAUSGERÜST
MULTIFUNCTION SUPPORT FOR GREENHOUSE FRAMEWORK

(30) Priorité: 09.11.1989 FR 8915009
(43) Date de publication de la demande: 02.09.1992
(73) Titulaire: FILCLAIR S.A., F-13770 Venelles (FR)
(72) Inventeur: THERY, Patrick, F-13090 Aix-en-Provence (FR)
(74) Mandataire: Roman, Michel
(86) Numéro de dépôt international: FR9000800
(87) Numéro de publication internationale: WO9107081

(56) Documents cités:
- FR-A- 812 097
- FR-A- 1 479 336
- FR-A- 2 367 425
- US-A- 3 911 632

## Description

La présente invention a pour objet un support multifonctions pour charpente de serre.
Il est destiné à la réalisation de serres pour la culture de végétaux dites "serres chapelles" aussi bien de type "mono chapelle" que "multichapelles".
L'ossature des serres "chapelles" est constituée de cintres généralement semi-circulaires recouverts d'un film plastique formant toiture, et portés par des poteaux ancrés dans le sol grâce à des massifs en béton. Les cintres sont disposés en rangées formant une ou pluseurs "nefs" dont les bords latéraux sont équipés de chéneaux permettant d'évacuer les eaux de pluie. Les cintres et poteaux sont le plus souvent tubulaires, de section circulaire.

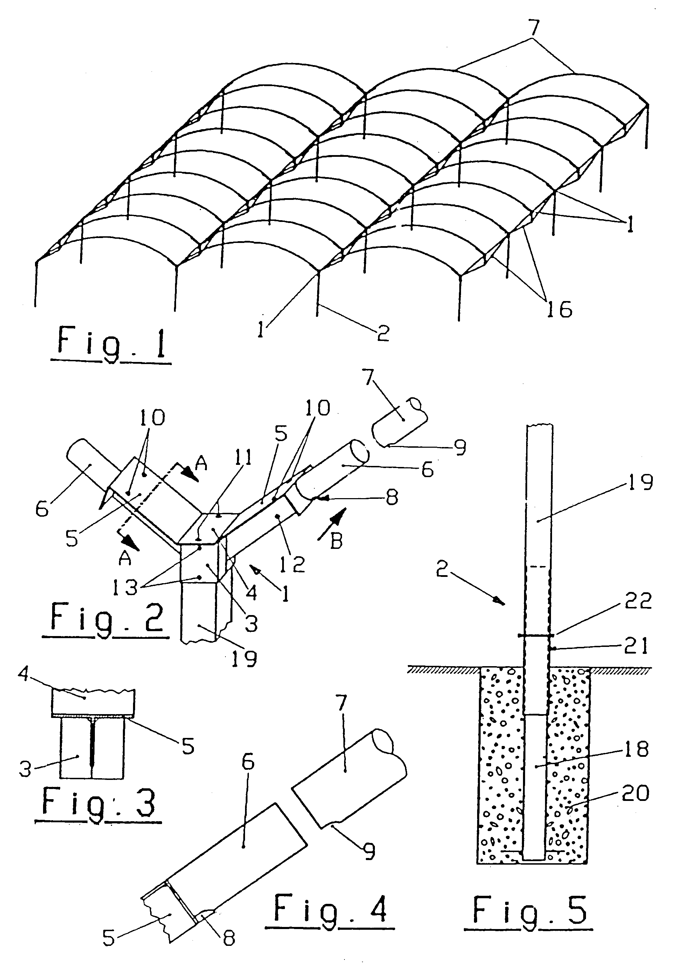

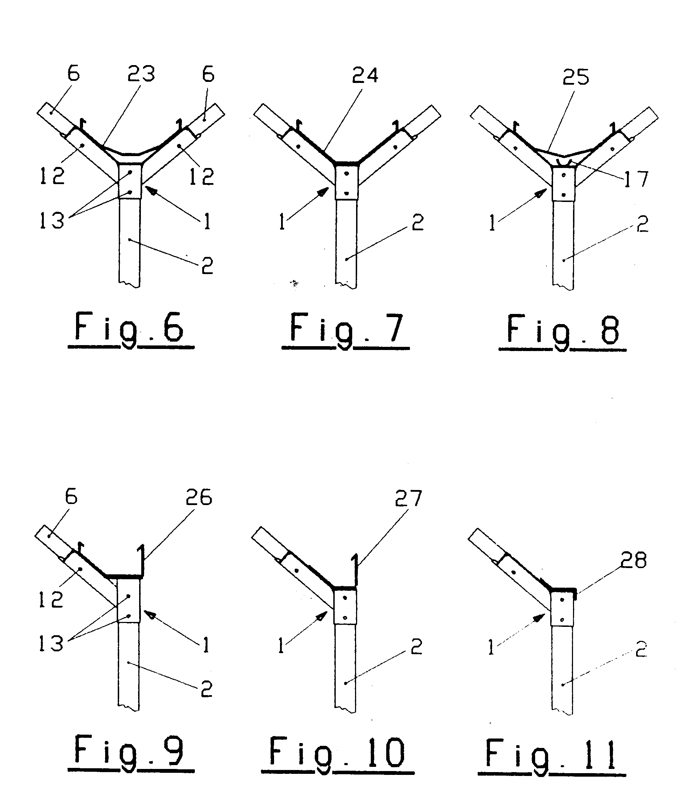

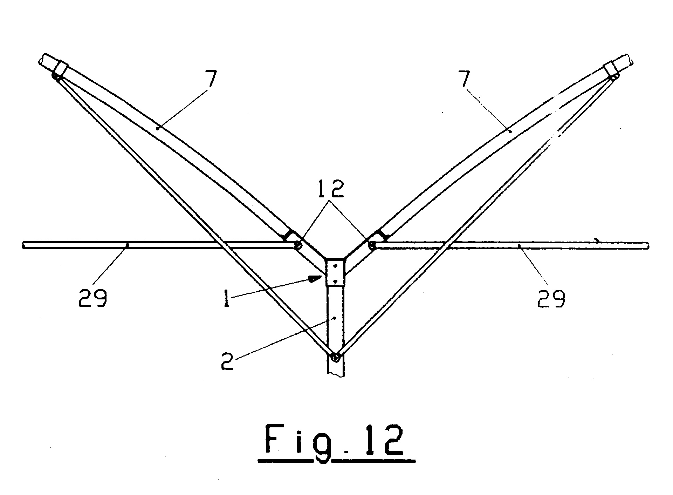

Les dispositifs réalisés à ce jour présentent un certain nombre d'inconvénients :
L'assemblage des différents éléments nécessite toute une série de pièces de raccordement différentes. En particulier les cintres et les poteaux doivent être équipés d'embouts soudés permettant leur fixation par boulonnage et le positionnement angulaire précis des cintres les tirants supports de culture montés entre les poteaux nécessitent des colliers fixés sur ces derniers les chéneaux doivent être fixés à la fois sur les cintres et poteaux par l'intermédiaire d'équerres ou autres pièces plus ou moins compliqués à usiner selon le type. D'autre part les chéneaux sont en général auto-portants, ce qui ne permet pas de grande portée à moins d'utiliser une tôle de forte épaisseur, et donc lourde, pour leur fabrication, ou à moins de les renforcer par des bracons repris sur les poteaux, mais il est alors impossible de placer des goulottes de récupération des eaux de condensation des chéneaux. Enfin la mise à niveau des hauts de poteaux pose des problèmes difficiles à résoudre: il faut, soit que le sol doit parfaitement nivelé soit prévoir des pièces supplémentaires pour compenser les différences de niveau.
Le brevet FR-1-479-336 pui décrit un dispositif avec les caractéristiques du préambule de la revendication 1, resout une partie de ces problèmes. Il décrit une serre comprenant des chéneaux disposés parallèlement entre eux et recevant les extrémités de cintres revêtus d'un film souple transparent, ces chéneaux étant maintenus horizontalement au-dessus du sol par des poteaux télescopiques ancrés dans des massifs en béton et pourvus de supports assurant la fixation des cintres et chéneaux. Toutefois, ce système ne permet pas de longues portées entre les supports et sa construction, relativement complexe, demande un temps de main-d'oeuvre important.
Le dispositif suivant la présente invention supprime ces inconvénients. En effet, il permet de construire très rapidement des serres "chapelles" avec des portées entre poteaux importantes, un positionnement angulaire automatique des cintres, des chéneaux légers et peu onéreux et un réglage simplifié des niveaux des hauts de poteaux, le tout avec un élément de raccordement unique supprimant les embouts de cintres et autres pièces de raccordement ou d'adaptation et convenant à tous les types de chéneaux, de contre-ventement ou de tirants supports de culture.
Il est constitué par la combinaison d'une tête de poteaux multifonctions s'emmanchant sur l'extrémité supérieure d'un poteau télescopique de section préférentiellement rectangulaire, et portant un ou deux manchons cylindriques de section circulaire faisant avec la verticale un angle voisin de 45 degrés, sur lesquels les cintres s'emboîtent sans boulonnage, et dont la base comporte un ergot correspondant à une encoche prévue à l'extrémité des cintres permettant un positionnement angulaire automatique de ceux-ci la susdite tête de poteau multifonctions étant pourvue de moyens de fixation des divers éléments constituant l'ossature de la serre, tels que chéneaux, tirants supports de culture ou goulotte de récupération de l'eau de condensation des chéneaux.
Sur les dessins annexés, donnés à titre d'exemple non limitatif d'une des formes de réalisation de l'objet de l'invention :
La figure 1 représente schématiquement l'ossature d'une serre montée avec les supports objet de l'invention
La figure 2 est une vue en perspective cavalière de la tête de poteau.
La figure 3 est une coupe à une échelle différente suivant les flèches A-A de la figure 2.
La figure 4 est une vue latérale agrandie suivant la flèche B de la figure 2.
La figure 5 est une représentation schématique du poteau télescopique.
Les figures 6 à 11 montrent différents types de chéneaux utilisables.
La figure 12 montre la fixation des cintres et des tirants supports de culture sur la tête de poteau.
Le dispositif, figure 1 à 12, est constitué d'une tête de poteau multifonctions 1 et d'un poteau télescopique 2 tubulaire de section rectangulaire.
La tête de poteau multifonctions 1 est formée d'abord d'un élément tubulaire 3, de section rectangulaire, s'emmanchant sur l'extrémité supérieure du poteau téléscopique 2 et portant une platine horizontale 4, ensuite d'une ou deux pièces en "T" 5 fixées sur ledit élement tubulaire 3, prolongées par deux manchons cylindriques 6 de section circulaire sur lesquels s'emboîtent les cintres 7, sans boulonnage. Les pièces en "T" 5 font un angle voisin de 45 degrés avec la verticale et sont soudées sur l élément tubulaire 3 de amnière à ce que leur surface supérieure prolonge latéralement la platine horizontale 4. Le positionnement angulaire automatique des cintres 7 est assuré par un ergot 8 situé à la base des manchons cylindriques 6, et correspondant à une encoche 9 prévue à l'extrémité des cintres 7.
La tête de poteau multifonctions 1 est pourvue de perforations pour le boulonnage des divers éléments constituant l'ossature de la serre. La platine horizontale 4 et la partie supérieure des pièces en "T" 5 portent respectivement des trous 10 destinés à la fixation des chéneaux de toutes formes 23 à 28 (figures 6 à 11), et des trous 11 destinés à la fixation des éléments intermédiaires 16 (figure 1) de sous-tension des chéneaux, et des éventuelles goulottes 17 de récupération de l'eau de condensation des chéneaux. La nervure verticale des pièces en "T" est munie de trous 12 permettant la fixation des tirants supports de culture 29. L'élément tubulaire 3 comporte des perforations 13 servant à la fixation sur le poteau télescopique 2.
Le poteau télescopique 2 est formé d'un tube supérieur 19 coulissant dans un tube inférieur 18, la longueur des deux tubes étant déterminée pour que la partie doublée du poteau 2 se trouve au niveau du sol, à la partie supérieure du massif d'ancrage 20, là où les contraintes sont les plus élevées, ce qui permet d'obtenir une excellente résistance au vent avec des poteaux relativement légers. Le tube supérieur 19 est équipé d'une vis de serrage provisoire 21 utilisée pour le réglage de niveau, l'immobilisation définitive étant assurée par un boulon traversant 22. Le poteau téléescopique 2 permet un pré-scellement de la base du tube inférieur 18 par plot de béton suivi d'un réglage de hauteur piuvant être modifié au cours du montage de la serre, en particulier pour ajuster la pente de chéneaux 23 à 28, le massif d'ancrage 20 n'étant coulé qu'une fois le réglage définitif réalisé.
Le positionnement des divers éléments constitutifs donnent à ce dispositif un maximum d'effets qui n'avaient pas été obtenus à ce jour par des dispositifs similaires.

## Revendications

1. Support multifonctions pour charpente de serre, destiné à la réalisation de serres du type "chapelle" simple ou multiple pour la culture de végétaux, comportant un poteau télescopique (2) ancré dans un massif en béton, des cintres (7), ainsi qu'une tête de poteau multifonction (1) assurant la fixation de ces derniers, caractérisé en ce que la tête de poteau multifonctions (1) est emmanchée sur l'extrémité supérieure du poteau téléscopique (2) ancré dans un massif en béton (20), et porte un ou deux manchons cylindriques (6) de section circulaire faisant avec la verticale un angle voisin de 45 degrés, les cintres (7) étant emboîtés sans boulonnage sur ces manchons cylindriques (6), la base du ou des manchons cylindriques (6) comportant un ergot (8) correspondant à une encoche (9) prévue à l'extrémité des cintres (7) et permettant un positionnement angulaire automatique de ceux-ci, la susdite tête de poteau multifonctions (1) étant pourvue de moyens (10, 11, 12, 13) pour la fixation des divers éléments constituant l'ossature de la serre, tels que chéneaux de toutes formes (23 à 28), éléments intermédiaires de sous-tension des chéneaux (16), tirants supports de culture (29) ou goulottes (17) de récupération de l'eau de condensation des chéneaux (17).

2. Dispositif suivant la revendication 1, se caractérisant par le fait que le poteau télescopique (2) est de section rectangulaire et est formé d'un tube supérieur (19) coulissant sur un tube inférieur (18), la longueur des deux tubes étant déterminée pour que la partie doublée du poteau (2) se trouve au niveau du sol, à la partie supérieure du massif d'ancrage (20) , là où les contraintes sont les plus élevées, le tube supérieur (19) étant équipé d'une vis de serrage provisoire (21) utilisée pour le réglage de niveau, l'immobilisation difinitive étant assurée par un boulon traversant (22).

3. Dispositif suivant l'une quelconque des revendications précédentes, se caractérisant par le fait que la tête de poteau multifonctions (1) est formée d'abord, d'un élément tubulaire (3), de section rectangulaire, s'emmanchant sur l'extrémité supérieure du poteau téléscopique (2) et portant une platine horizontale (4), ensuite d'une ou deux pièces en "T" (5) fixées sur ledit élément tubulaire (3), prolongées par le manchon cylindrique (6), les pièces en "T" (5) étant soudées sur l'élément tubulaire (3) de manière à ce que leur surface supérieure prolonge latéralement la platine horizontale (4).

4. Dispositif suivant l'une quelconque des revendications précédentes, se caractérisant par le fait que les moyens de fixation des éléments d'ossature sont constitués de perforations pour boulonnages portés par la tête de poteau multifonctions (1), la platine horizontale (4) et la partie supérieure des pièces en "T" (5) étant respectivement équipées de trous (10) destinés à la fixation des chéneaux (23 à 28) figures 6 à 11, et de trous (11) destinés à la fixation des éléments intermédiaires (16) figure 1, de sous-tension des chéneaux, ainsi que des goulottes (17) de récupération de l'eau de condensation des chéneaux, la nervure verticale des pièces en "T" (5) étant munie de trous (12) permettant la fixation des tirants supports de culture (29) et l'élément tubulaire (3) comportant des perforations (13) servant à la fixation sur le poteau téléscopique (2).

## Claims

1. Multifunctional supporting system for the greenhouse frames, intended for use on single or multispan greenhouses for agriculture and comprising a telescopic column (2) anchored in a concrete block, the arches (7) and a multifunction column head (1) being used to fix the said arches, characterized in that multifunction column head (1) is inserted onto the upper end of telescopic column (2) anchored in a concrete block (20), and bearing one or two cylindrical sleeves (6) with circular sections to form an angle close to 45° to the vertical, arches (7) being inserted without bolts onto the cylindrical sleeves (6), the base of the cylindrical sleeve(s) (6) comprising a lug (8) corresponding to a notch (9) provided at the end of arches (7) and enabling automatic angular positioning of the latter, the said head of multifunction column (1) being provided with the means (10, 11, 12, 13) for fixing the various elements constituting the greenhouse frame, such as gutters of all forms (23 to 28), intermediary element for undertensioning channel (16), crop support rods (29) or throats (17) for recovery of channel condensation water.

2. Device as per claim 1 characterized by the fact that the telescopic column (2) has a rectangular section and is formed of an upper tube (19) sliding in a lower tube (18), the length of both tubes being determined so that the doubled part of the column (2) is at the level of the ground, at the upper part of the anchor block (20), where the stresses are highest, the upper tube (19) being equipped with a temporary tightening screw (21) used to adjust the level, definitive immobilisation being provided by a cross bolt (22).

3. Device as per any one of the aforesaid claims characterized by the fact that the head of the multifunction column (1) is formed firstly of a tubular element (3) of rectangular section inserted onto the upper end of the telescopic column (2) and bearing a horizontal plate (4), thereafter one or two T parts fixed on the said tubular element (3) extended by the cylindrical sleeve (6), the T parts (5) being welded onto the tubular element (3) so that their upper surface laterally prolongs the horizontal plate (4).

4. Device as per any one of the aforesaid claims characterized by the fact that the means for fixing the frame elements consist of perforations for bolts carried by the the multifunction column head (1), the horizontal plate (4) and the upper part of the T parts (5) being respectively equipped with holes (10) intended for fixing channels (23 to 28), see figures 6 to 11, and holes (11) for fixing the intermediary elements (16) - see figure 1 - for undertensioning of channels, and the throats (17) for recovering channel condensation water, the vertical rib of the T parts (5) being fitted with holes (12) for fixing the crops support rods (29) and tubular elements (3) comprising perforations (13) for fixing on the telescopic column (2).

## Patentansprüche

1. Mehrzweckträger für Gewächshallen-Rahmenkonstruktion, bestimmt für die Herstellung von einfachen bzw. mehrfachen Gewächshallen des Typs "Folienblock" zur Pflanzenkultur, bestehend aus einem in einem Betonsockel verankerten teleskopischen Pfosten (2), Trägerbogen (7) sowie einem Mehrzweck-Pfostenkopf (1) zur Befestigung dieser Trägerbogen, dadurch gekennzeichnet, daß der Mehrzweck-Pfostenkopf (1) auf das obere Ende des in einem Betonsockel (20) verankerten teleskopischen Pfostens (2) aufgesteckt ist und ein oder zwei zylindrische Stutzen (6) kreisförmigen Querschnitts trägt, die zur Senkrechten einen Winkel von etwa 45° bilden, wobei die Trägerbogen (7) ohne Schraubbefestigung in die zylindrischen Stutzen (6) gesteckt werden und die Basis des bzw. der zylindrischen Stutzen (6) mit einem Zapfen (8) versehen ist, der einer am Ende der Trägerbogen (7) vorgesehenen Aussparung (9) zugeordnet ist und die automatische Winkelpositionierung der beiden Elemente ermöglicht, und der besagte Mehrzweck-Pfostenkopf (1) mit Mitteln (10, 11, 12, 13) für die Befestigung der verschiedenen das Gerippe der Gewächshalle bildenden Elemente, wie Traufen jeglicher Form (23 bis 28), Zwischenteile zur Unterspannung der Traufen (16), Kulturträgerstreben (29) oder Ablaufrinnen (17) zum Auffangen des Kondenswassers der Traufen (17) versehen ist.

2. Vorrichtung nach Anspruch 1, dadurch gekennzeichnet, daß der teleskopische Pfosten (2) einen rechteckigen Querschnitt hat und durch ein oberes Rohr (19) gebildet wird, welches auf einem unteren Rohr (18) gleitet, wobei die Länge der beiden Rohre so bestimmt ist, daß sich der verdoppelte Teil des Pfostens auf Bodenebene, am oberen Teil des Verankerungssockels (20), wo die Belastungen am stärksten sind, befindet, das obere Rohr (19) mit einer Klemmschraube (21) zur vorläufigen Einstellung der Höhe versehen ist, und die endgültige Verriegelung durch einen durchgehenden Schraubbolzen (22) gewährleistet wird.

3. Vorrichtung nach irgend einem der vorhergehenden Ansprüche, dadurch gekennzeichnet, daß der Mehrzweck-Pfostenkopf (1) zuerst aus einem rohrförmigen Element (3) mit rechteckigem Querschnitt, welches sich in das obere Ende des teleskopischen Pfostens (2) einstecken läßt und eine horizontale Platine (4) trägt, dann aus einem oder zwei auf dem besagten rohrförmigen Element (3) befestigen T-Stücken (5), die durch den zylindrischen Stutzen (6) verlängert werden, gebildet wird, wobei die T-Stücke (5) so auf das rohrförmige Element (3) geschweißt sind, daß ihre obere Fläche die horizontale Platine (4) seitlich verlängert.

4. Vorrichtung nach irgend einem der vorhergehenden Ansprüche, dadurch gekennzeichnet, daß die Befestigungsmittel der Elemente der Rahmenkonstruktion von Durchbohrungen für Verschraubungen, getragen von dem Mehrzweck-Pfostenkopf (1), gebildet werden, die horizontale Platine (4) und der obere Teil der T-Stücke (5) dabei jeweils mit Bohrungen (10) bestimmt zur Befestigung der Traufen (23 bis 28), Abbildungen 6 bis 11, und mit Bohrungen (11) zur Befestigung der Zwischenteile (16), Abbildung 1, der Unterspannung der Traufen sowie der Ablaufrinnen (17) zum Auffangen des Kondenswassers der Traufen versehen sind, während die senkrechte Rippe der T-Stücke (5) Bohrungen (12) zur Befestigung der Kulturträgerstreben (29) und das rohrförmige Element (3) Perforationen (13) zur Befestigung am teleskopischen Pfosten (2) aufweisen.
